# EUROPEAN PATENT APPLICATION

(11) **EP 0 680 240 A2**
(43) Date of publication of application: **02.11.1995**
(21) Application number: 95106340.3
(22) Date of filing: 27.04.1995
(51) Int. Cl.: H04Q 11/04, H04L 12/56

(54) **Switching device and switching system using plurality of such switching devices**

(30) Priority: 28.04.1994 JP 92446/94
(71) Applicant: FUJITSU LIMITED, Kawasaki-shi, Kanagawa 211 (JP)
(72) Inventor: Nomura, Katsunobu, c/o Fujitsu Limited, Kawasaki-shi, Kanagawa 211 (JP); Takahashi, Atsuo, c/o Fujitsu Limited, Kawasaki-shi, Kanagawa 211 (JP)
(74) Representative: Lehn, Werner, Dipl.-Ing.

(57) **Abstract**

A switching device includes a switching unit (230) having input ports (Ti) and output ports (To), information supplied to each of the input ports (Ti) being switched to one of the output ports (To), an information collecting unit (231) for collecting information regarding an operation state of the switching unit (230), an information receiving unit (232) for receiving information from an external unit, an information generating unit (233) for generating information based on the information obtained by the information collecting unit (231) and the information received by the information receiving unit (232), and an information output unit (234) for outputting the information generated by the information generating unit (233).

## Description

### BACKGROUND OF THE INVENTION

### (1) Field of the Invention

The present invention generally relates to a switching device and a switching system using a plurality of such switching devices, and more particularly to a switching device, such as an ATM (Asynchronous Transfer Mode) switching device, from which statistical information such as information indicating congestion of data is to be extracted, and a switching system which is suitable as an ATM switching system provided in a high-speed network such as a B-ISDN (Broadband Integrated Services Digital Network).

### (2) Description of the Related Art

A packet switching system is generally used as a switching system for an N-ISDN (Narrow-band ISDN) in which signals having transmission speeds within a range of 64kbps - 1.5Mbps are transmitted. In the packet switching system, information is divided into packets each of which has a proper number of bits and is provided with control information indicating a destination, and the packets are switched in accordance with destinations indicated by the control information added thereto. Each packet can have a size within a range of 128 - 4096 bytes, so that an amount of transmitted information is variable and low-density information in a network such as a LAN (Local Area Network) can be efficiently transmitted.

In addition, since information is transmitted packet by packet, there is an advantage in which communication between units having different processing speeds, such as a terminal unit and a host unit, can be performed. However, in the packet switching system, packets are not switched by using hardware, but a processor receiving the packets decodes control information and processes the packets using software. Thus, the transmission speed is limited by a processing speed of the processor. In addition, since an error detecting process and a correcting process are executed by means of software, the software is provided with a large load. Therefore, the packet switching system is not suitable for a network, such as the B-ISDN, in which signals are processed at a high speed (e.g. a few hundreds Mbps).

In recent years, attention has been paid to an ATM switching system as a switching system which can process signals at the high speed. The ATM switching system is similar to the packet switching system in that information is divided into groups. However, although each of packets into which information is divided in the packet switching system has a variable length falling within a range of 128 - 4096 bytes, each of groups (referred to as cells) into which information is divided in the ATM switching system has a fixed length of 53 bytes.

Each cell is formed of a transmission information part having 48 bytes and a header part having 5 bytes. Cells are switched to destinations in accordance with control information (indicating destinations) set in the header parts thereof. In the ATM switching system, the cells are switched by means of hardware of ATM switching devices (whereas packets are switched by means of software in the packet switching system). Since the hardware is used for the switching operation, the variation of signal delay is small. Thus, the ATM switching system is suitable for a multimedia communication using character data, audio data and image data.

Meantime, the ATM switching system requires the following controls (ATM switching controls):
(1) a "call setting control" for decoding identification information of a cell and for determining through which VCHs (Virtual Channel Handlers) or ATM switching devices the cell travels;
(2) a "connection accepting control" for confirming that the cell can travel through all the VCHs in a route under requested service conditions and for accepting a communication;
(3) a "use parameter control" for canceling cells which are violating a rule in a case where an actual traffic exceeds a traffic volume in contract for each subscriber, in order to avoid deteriorating the communication quality in the network;
(4) a "shaving control" for limiting an instantaneous transmission speed of a cell to a constant value (the volume of the virtual path) by means of temporarily storing cells in a buffer memory provided at the front side of the ATM switching device, at the back side of the ATM device or in the ATM switching device;
(5) a "cell loss and priority control" for canceling information (e.g. audio and/or image information) having a low priority in order to avoid overflow of the buffer memory in a case where there is a sudden peak of the traffic; and
(6) a "congestion control" for temporarily limiting request of connection by means of limiting a peak transmission speed of cells from a terminal when the network is congested with traffic.

The above controls are mainly performed by means of software in a control processing unit (generally named a processor).

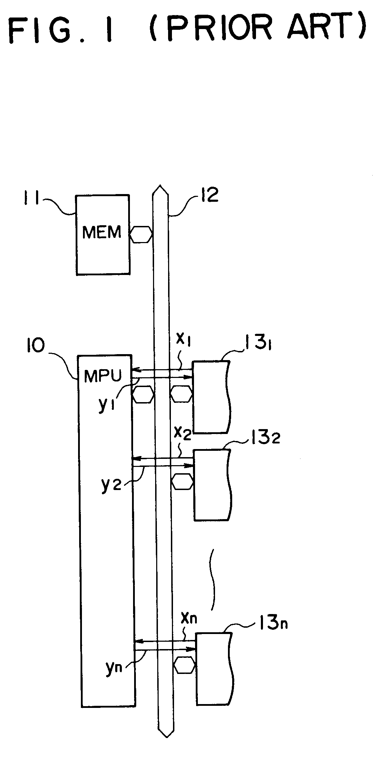

Fig. 1 shows an example of a conventional ATM switching system. Referring to Fig. 1, the ATM switching system has a processor 10, a memory 11 and n ATM switching devices 13₁, 13₂, ..., and 13ₙ all of which are connected by a bus 12. When statistical information required for the ATM switching control described above is set in an ATM switching device 13ᵢ, the ATM switching device 13i activates a signal Xᵢ. The processor 10 checks whether the signals X₁, X₂, ..., and Xₙ from the respective ATM switching devices 13₁, 13₂, ..., and 13ₙ are activated. The processor 10 supplies a request signal Yⱼ to an ATM switching device 13ⱼ which activates a signal Xⱼ (j = 1, 2, ..., n) so as to request the ATM switching device 13ⱼ to transmit the statistical information set therein to the bus 12. The statistical information output from the ATM switching device 13ⱼ in accordance with the request from the processor 10 is supplied to the memory 11 via the bus 12. This operation is sequentially performed.

In the above ATM switching system, since the processor 10 sequentially reads the statistical information from the n ATM switching devices 13₁, 13₂, ..., and 13ₙ, a time for which the processor 10 is occupied with reading the statistical information depends on the number of ATM switching devices coupled to the processor 10 via the bus 12. Thus, in a case where a large number of ATM switches are coupled to the processor 10 which must perform the ATM switching controls described above, operations for reading the statistical information interferes the ATM switching controls.

In addition, the respective ATM switching devices must be independently connected to the bus 12, and must be independently connected to the processor 10 by control wires for the signals Xⱼ and Yⱼ. Thus, a complex wiring design is needed for the conventional ATM switching system.

### SUMMARY OF THE INVENTION

Accordingly, a general object of the present invention is to provide a novel and useful switching device and switching system in which the disadvantages of the aforementioned prior art are eliminated.

A specific object of the present invention is to provide a switching device applicable, as one of a plurality of switching devices, to a switching system in which information can be read from the plurality of switching devices in a constant time regardless of the number of switching devices.

Another object of the present invention is to provide a switching device, as one of a plurality of switching devices, applicable for use in a switching system for which wiring can be simplified.

The above objects of the present invention are achieved by a switching device comprising: a switching unit having input ports and output ports, information supplied to each of the input ports being switched to one of the output ports; information collecting means for collecting information regarding an operation state of the switching unit; information receiving means for receiving information from an external unit; information generating means for generating information based on the information obtained by the information collecting means and the information received by the information receiving means; and information output means for outputting the information generated by the information generating means.

Another object of the present invention is to provide a switching system in which information can be read from a plurality of switching devices provided therein in a constant time regardless of the number of switching devices.

Still another object of the present invention is to provide a switching system, having a plurality of switching circuits, for which wiring can be simplified.

The objects of the present invention are achieved by a switching system comprising: n switching devices; a first switching device to an n-th switching device, which are serially connected (n being an integer); and checking means for checking operation states of the switching devices, each of the switching devices having: a switching unit having input ports and output ports, information supplied to each of the input ports being switched to one of the output ports; information collecting means for collecting information regarding an operation state of the switching unit; information receiving means for receiving information from an external unit; information generating means for generating information based on the information obtained by the information collecting means and the information received by the information receiving means; and information output means for outputting the information generated by the information generating means, wherein the information output means of an i-th switching device is connected to the information receiving means of an (i+1)-th switching device (i = 1, 2, ..., n-1), and the information output means of the n-th switching device is coupled to the checking means so that the checking means checks the operation states of the switching devices based on the information supplied from the n-th switching device.

According to the present invention, since the plurality of switching devices are serially connected so that information items regarding operation states of the respective switching devices are transmitted to the checking means through the respective switching devices, information can be read from the plurality of switching devices in a constant time regardless of the number of switching devices.

In addition, since only the n-th switching device is coupled to the checking means, the wiring of the system can be simplified.

### BRIEF DESCRIPTION OF THE DRAWINGS

Other objects, features and advantages of the present invention will become apparent from the following detailed description when read in conjunction with the accompanying drawings, in which:
Fig. 1 is a block diagram illustrating a conventional ATM switching system;
Fig. 2 is a block diagram illustrating an ATM switching system according to a first embodiment of the present invention;
Fig. 3 is a block diagram illustrating an ATM switching device provided in the ATM switching system shown in Fig. 2;
Fig. 4 is a circuit diagram illustrating a detailed structure of a switching portion of the ATM switching device shown in Fig. 3;
Fig. 5 is a diagram illustrating a format of data processed in the ATM switching system shown in Fig. 2;
Fig. 6 is a timing chart illustrating an example of an operation for outputting and inputting information in each ATM switching device;
Fig. 7 is a timing chart illustrating another example of the operation for outputting and inputting information in each ATM switching device;
Fig. 8 is a block diagram illustrating an ATM switching system according to a second embodiment of the present invention;
Fig. 9 is a diagram illustrating a format of data processed in the ATM switching system shown in Fig. 8; and
Fig. 10 is a block diagram illustrating an ATM switching system according to a third embodiment of the present invention.

### DESCRIPTION OF THE PREFERRED EMBODIMENTS

A description will be given of a first embodiment of the present invention.

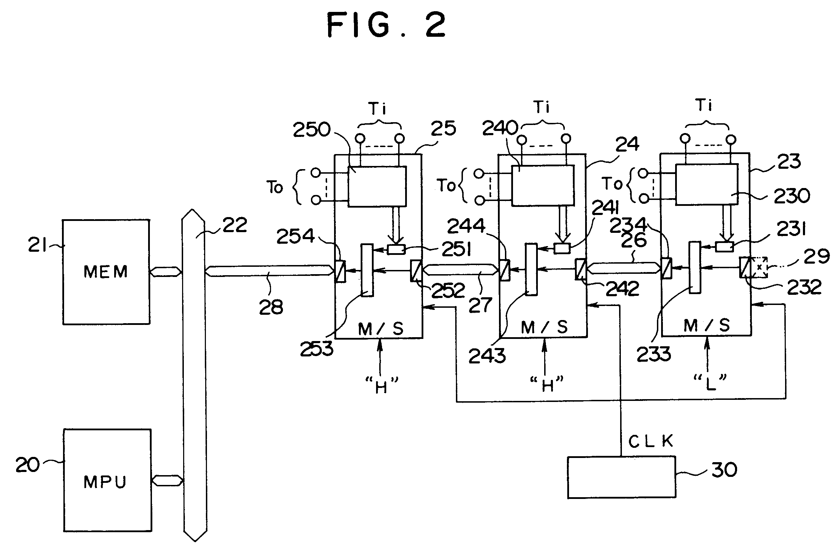

An ATM switching system according to the first embodiment of the present invention is formed as shown in Fig. 2. Referring to Fig. 2, the ATM switching system has a processor 20, a memory 21, a first ATM switching device 23, a second ATM switching device 24, a third ATM switching device 25 and a clock generator 30. The processor 20, the memory 21 and the third ATM switching device 25 are coupled to each other by a bus 22. The clock generator 30 supplies a clock signal CLK to the first ATM switching 23, the second ATM switching device 24 and the third ATM switching device 25 in parallel so that these ATM switching devices 23, 24 and 25 are operated in synchronism with the clock signal CLK.

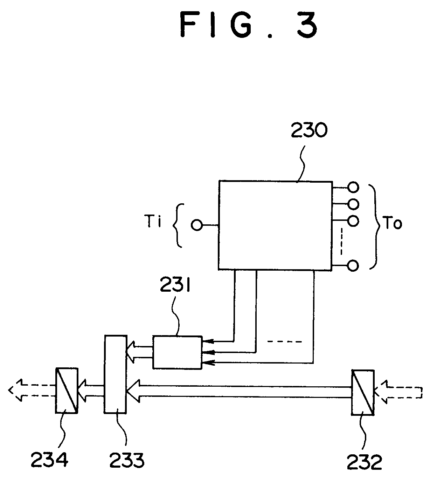

The respective ATM switching devices 23, 24 and 25 have the same structure. The structure of the first ATM switching device 23 is representatively shown in Fig. 3. Referring to Fig. 3, the ATM switching device 23 has a switching unit 230, an information collecting unit 231, an information receiving unit 232, a statistical information generating unit 233 and an information output unit 234. The switching unit 230 has input ports Tᵢ and output ports To and switches information, supplied to each of the input ports Ti, to one of the output ports Tₒ. The information collecting unit 231 collects information (statistical information) regarding operating states of the switching unit 230. The information receiving unit 232 receives statistical information, having a predetermined format, supplied from an external unit. The statistical information generating unit 233 generates new statistical information from the statistical information received by the information receiving unit 232 and the output of the information collecting unit 231. The information output unit 234 outputs the information generated by the statistical information generating unit 233 to an external unit.

The second and third ATM switching devices 24 and 25 respectively have switching units 240 and 250, information collecting units 241 and 251, information receiving units 242 and 252, statistical information generating units 243 and 253 and information output units 244 and 254 in the same manner as the first ATM switching device 23.

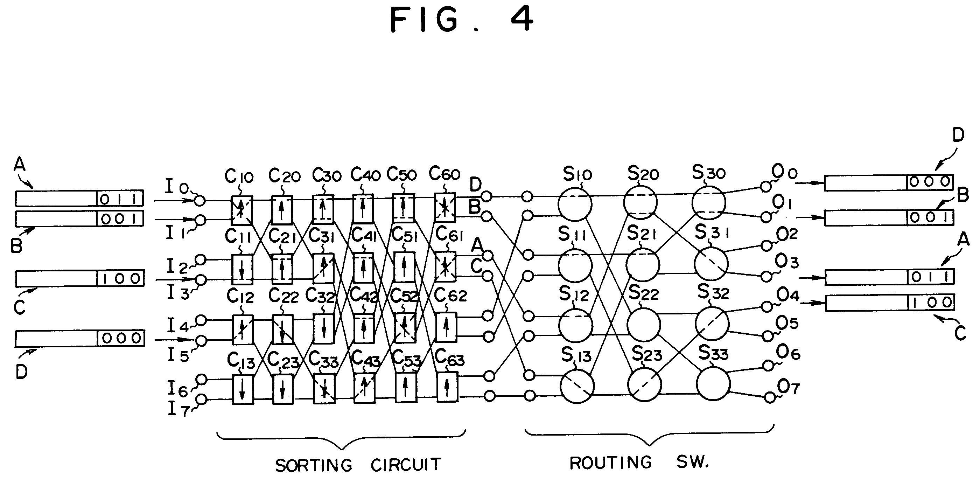

An essential structure of each of the switching units 230, 240 and 250 is shown in Fig. 4.

Referring to Fig. 4, the switching unit (an ATM switching unit) has not only a routing switch which is an essential part of the switching unit but also a sorting circuit for sorting cells in order of addresses of destinations (the sorting circuit may be omitted). Input ports I₀ - I₇ are coupled to the sorting circuit and output ports O₀ - O₇ are coupled to the routing switch.

The sorting circuit has many comparators C₁₀-C₁₃, C₂₀-C₂₃, C₃₀-C₃₃, C₄₀-C₄₃, C₅₀-C₅₃ and C₆₀-C₆₃ each of which is indicated by a rectangle having an arrow directed upward or downward. Each comparator having an arrow directed upward compares addresses of two cells and switches a cell having a smaller address to an upper line and a cell having a larger address to a lower line. If only one cell is supplied to a comparator having the arrow directed upward, the comparator switches the cell to an upper line unconditionally. Each comparator having an arrow directed downward compares addresses of two cells and switches a cell having a smaller address to a lower line and a cell having a larger address to an upper line. If only one cell is supplied to a comparator having the arrow directed downward, the comparator switches the cell to a lower line.

The routing switch has many switching elements S₁₀-S₁₃, S₂₀-S₂₃ and S₃₀-S₃₃. When a MSB (Most Significant Bit) of an address of a cell is equal to "0", each of the switching elements S₁₀-S₁₃ in a first stage switches the cell to an upper line. When a MSB of an address of a cell is equal to "1", each of the switching elements S₁₀-S₁₃ in the first stage switches the cell to a lower line. Each of the switching elements S₂₀-S₂₃ in a second stage switches a cell to an upper line when a second bit of an address of the cell is equal to "0" and to a lower line when a second bit of an address of the cell is equal to "1". Each of the switching elements S30-S33 in a third stage switches a cell to an upper line when a LSB (Least Significant Bit) of an address of the cell is equal to "0" and to a lower line when the LSB of an address of the cell is equal to "1".

When cells A, B, C and D are respectively supplied to the input ports I₀, I₁, I₃ and I₅, the switching unit 230 operates as follows. The cell A has an address "011" (binary), the cell B has an address "001" (binary) and the cell C has an address "100" (binary).

The address of the cell A is greater than the address of the cell B. Thus, the cell A is switched to the lower line by the comparator C₁₀, and the cell B is switched to the upper line by the comparator C₁₀. Only the cell C is supplied to the comparator C11, so that the cell C is switched to the lower line by the comparator C11. Only the cell D is supplied to the comparator C12, so that the cell D is switched to the upper line. After this, the comparison process is repeated by other comparators, so that the sorting circuit outputs the cell D, cell B, cell A and cell C arranged in this order from the top. That is, the cells are arranged in accordance with address.

The respective cells arranged in accordance with address are supplied to the switching elements S₁₀, S₁₁, S₁₂ and S₁₃ in the first stage. Since the MSB of the address of the cell A is equal to "0", the cell A is switched to the upper line (the switching element S₂₀) by the switching element S₁₂. Since the second bit of the address of the cell A is equal to "1", the cell A is switched to the lower line (the switching element S₃₁) by the switching element S₂₀. Last, since the LSB of the address of the cell A is equal to "1", the cell A is switched to the lower line (the output port O₃) by the switching element S₃₁. That is, the output port O₃ is selected for the cell A based on the address of the cell A, so that the cell A is output from the output port O₃.

Returning to Fig. 2, the information output unit 234 of the first ATM switching device 23 is connected to the information receiving unit 242 of the second ATM switching device 24 by wiring 26. The information output unit 244 of the second ATM switching device 24 is connected to the information receiving unit 252 of the third ATM switching device 25 by wiring 27. The information output unit 254 of the third ATM switching device 25 is connected to the bus 22 by wiring 28. That is, the first, second and third ATM switching devices 23, 24 and 25 are serially connected.

Each of the first, second and third ATM switching devices 23, 24 and 25 are provided with M/S (master/slave) terminals. For example, if the M/S terminal of the first ATM switching device 23 is set at a predetermined level (e.g. a low level (L)), the first ATM switching device 23 is operated as a master switching device. In the master switching device, dummy statistical information (e.g. all bits are "0") can be generated.

If a terminal block 29 (indicated by a dotted line in Fig. 2) is connected to the information receiving unit 232 of the first ATM switching device 23, the M/S terminals of the respective ATM switching devices 23, 24 and 25 can be omitted. The terminal block 29 supplies a predetermined level (e.g. a low level (L)) to the information receiving unit 232 as dummy information.

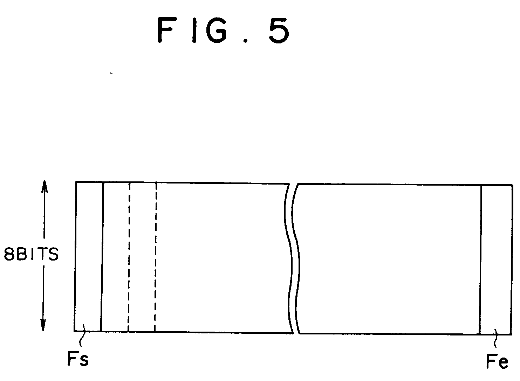

Data in the information receiving units 232, 242 and 252 and the information outputting units 234,244 and 255 has a format as shown in Fig. 5. In this format, the data has a width of a plurality of bits (e.g. 8 bits). Thus, a number of lines included in each of the wiring 26, 27 and 28 is the same as the number of bits of the data width, so that the plurality of bits are transmitted, in parallel, from the first ATM switching device 23 to the second ATM switching device 24, from the second ATM switching device 24 to the third ATM switching device 25, and from the third switching device 25 to the bus 22. A start frame Fs and an end frame Fe in this format are respectively provided with a bit pattern (e.g. FF_{(F)}) representing start/end of data. A payload frame is located between the start frame Fs and the end frame Fe. The payload frame is provided with statistical information. The statistical information includes various information items required for the ATM switching control, such as valid/invalid information of payload, overflow information of a buffer memory, information regarding canceled cells, a virtual path identifier (VPI) and a virtual channel identifier (VCI). These information items indicate operation states of each of the switching units 230, 240 and 250 of the respective ATM switching devices 23, 24 and 25. These information items are collected by the information collecting units 231, 241 and 251 in the respective ATM switching devices 23, 24 and 25.

In the ATM switching system having the above structure, the first ATM switching device 23 operates as the master switching device (the information receiving unit 232 is in an open state). The dummy information generated by the information collecting unit 231 or the statistical information generating unit 233 is output from the information output unit 234.

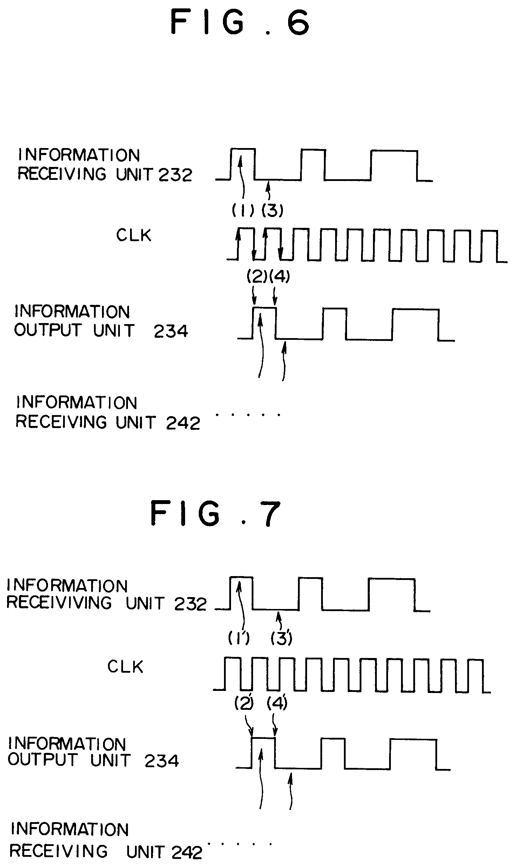

The second ATM switching device 24 operates as a slave switching device. The information supplied from the first ATM switching device 23 to the second ATM switching device 24 is received by the information receiving unit 242 at rising edges (1) and (3) of the clock signal CLK as shown in Fig. 6. The statistical information generating unit 243 generates new statistical information based on the information received by the information receiving unit 242 and the output of the information collecting unit 241. The new statistical information is output from the information output unit 244 at falling edges (2) and (4) of the clock signal CLK as shown in Fig. 6.

The third ATM switching device 25 also operates as the slave switching device. The statistical information supplied from the second ATM switching device 24 to the third ATM switching device 25 is received by the information receiving unit 252 at rising edges (1) and (3). The new statistical information generated by the statistical information generating means based on the statistical information from the information receiving unit 252 and the output of the information collecting unit 251 is output from the information output unit 254 at falling edges (2) and (4) of the clock signal CLK.

That is, the statistical information is serially transmitted from the first ATM switching device 23 to the second ATM switching device 24, from the second ATM switching device 24 to the third ATM switching device 25 and from the third ATM switching device 25 to the bus 22 in synchronism with the clock signal CLK. The statistical information supplied to the bus 22 is transmitted to the memory 21 through the bus 22 under control of the processor 20.

According to the first embodiment described above, the processor 20 may carry out a process for collecting the statistical information from only the third ATM switching device 25. Thus, the load to the processor 20 can be reduced, so that the processor 20 can mainly perform various control processes required for the ATM switching operation.

In addition, even if the number of ATM switching devices is increased, wiring for only a single ATM switching device is connected to the bus 22. Thus, the wiring of a large-scale ATM switching system provided with a large number of ATM switching devices can be simplified.

The information receiving units 232, 242 and 252 and the information output units 234, 244 and 254 are formed, for example, of registers. The information collecting units 231, 241 and 251 are formed, for example, of buffers for storing the statistical information from the switching units 230, 240 and 250. The statistical information generating units 233, 243, 253 are formed, for example, of buffers having a switching function (or multiplexers). The buffer (the multiplexer) used as the statistical information generating unit (233, 243, 253) selects either the output of the buffer used as the information collecting unit (231, 241, 251) or the statistical information from the register used as the information receiving unit (232, 242, 252). The buffer used as the statistical information generating unit (233, 243, 253) then outputs the selected information as the new statistical information. This buffer used as the statistical information generating unit (233, 243, 253), for example, selects the statistical information from the register used as the information receiving unit (232, 242, 252) on a priority basis. That is, when the register used as the information receiving unit (232, 242, 252) is provided with information which is valid as the statistical information, the buffer used as the statistical information generating unit (233, 243, 253) always selects the information from the register as the new statistical information. On the other hand, when the information set in the register is invalid as the statistical information, the buffer used as the statistical information generating unit (233, 243, 253) selects the output of the buffer used as the information collecting unit (231, 241, 251).

In each of the ATM switching devices, the statistical information may be received and output at a timing as shown in Fig. 7. Referring to Fig. 7, the statistical information is received by the information receiving unit at falling edges (1') and (3') of the clock signal CLK. The statistical information is output from the information output unit at rising edges (2') and (4') of the clock signal CLK.

In a case where the information is transmitted from the third ATM switching device 25 to the memory 21, the third ATM switching device must obtain the use of the bus 22.

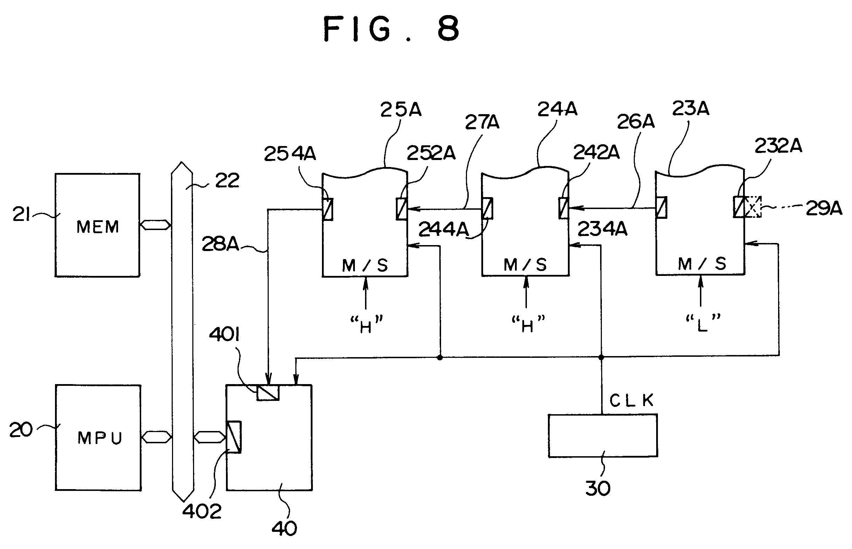

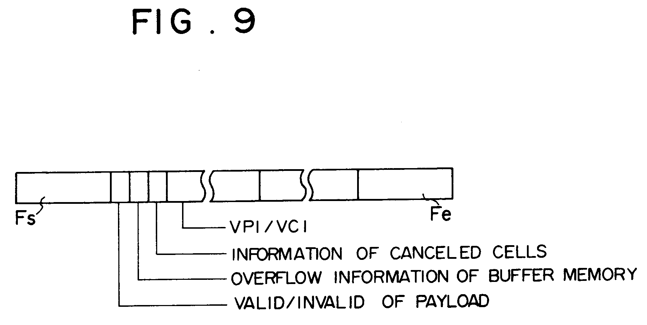

A description will now be given, with reference to Figs. 8 and 9, of a second embodiment of the present invention. In Fig. 8, only information receiving units 232A, 242A and 252A and information output units 234A, 244A and 254A of first, second and third ATM switching devices 23A, 24A and 25A are indicated, but other units actually provided in the ATM switching devices 23A, 24A and 25A are omitted .

In the second embodiment shown in Fig. 8, a format conversion device 40 is provided between the bus 22 and a third ATM switching device 25A. A line 26A connects the information output unit 234A of the first ATM switching device 23A and the information receiving unit 242A of the second ATM switching device 24A. A line 27A connects the information output unit 244A of the second ATM switching device 24A and the information input unit 252A of the third ATM switching device 25A. The format conversion device 40 has an information receiving unit 401 and an information output unit 402. A line 28A connects the information output unit 254A of the third ATM switching device 25A and the information receiving unit 401 of the format conversion device 40. The first, second and third ATM switching devices 23A, 24A and 25A and the format conversion device 40 operate in synchronism with the clock signal CLK supplied from the clock generator 30, in the same manner as in the first embodiment described above.

The information transmitted through the respective lines 26A, 27A and 28A has the same format. The format of the information received by the information receiving unit 401 is converted into a format acceptable to the bus 22 by the format conversion device 40. The information having the converted format is supplied from the information output unit 402 of the format conversion device 40 to the bus 22.

An example of the format of the information transmitted through the respective lines 26A, 27A and 28A is shown in Fig. 9. Referring to Fig. 9, the information is serial data in which the start frame Fs and the end frame Fe are respectively located at the head and the end of the data. The start frame Fs and the end frame Fe are respectively provided with bit patterns indicating the start/end of the data. In a case, for example, of the HDLC procedure, the bit pattern is formed of five or more bits "1" and bits "0" arranged after the bits "1". A payload frame is located between the start frame Fs and the end frame Fe. The payload frame is provided, for example, with the valid/invalid information of the payload frame, the overflow information of the buffer memory, information of canceled cells and VPI/VCI.

The serial data having the format shown in Fig. 9 is transmitted through the ATM switching devices 23A, 24A and 25A and the lines 26A, 27A and 28A and supplied to the format conversion device 40. The format conversion device 40 converts the serial data into parallel data having the format acceptable to the bus 22. The parallel data is transmitted to the memory 21 through the bus 22 under control of the processor 20. In this case, the format conversion device 40 has a function for obtaining the use of the bus 22.

According to the second embodiment described above, even if the format of the information serially transmitted through the ATM switching devices differs from the format acceptable to the bus 22, the format of the transmitted information is converted into the format acceptable to the bus 22. Thus, the type of the ATM switching devices used in the ATM switching system is not limited by the control system (the bus 22, the memory 21 and the processor 20) for controlling the ATM switching devices.

In the above second embodiment, a termination block 29A may be connected to the information receiving unit 232A of the first ATM switching device 23A, instead of providing the M/S (master/slave) terminals in the ATM switching devices 23A, 24A and 25A.

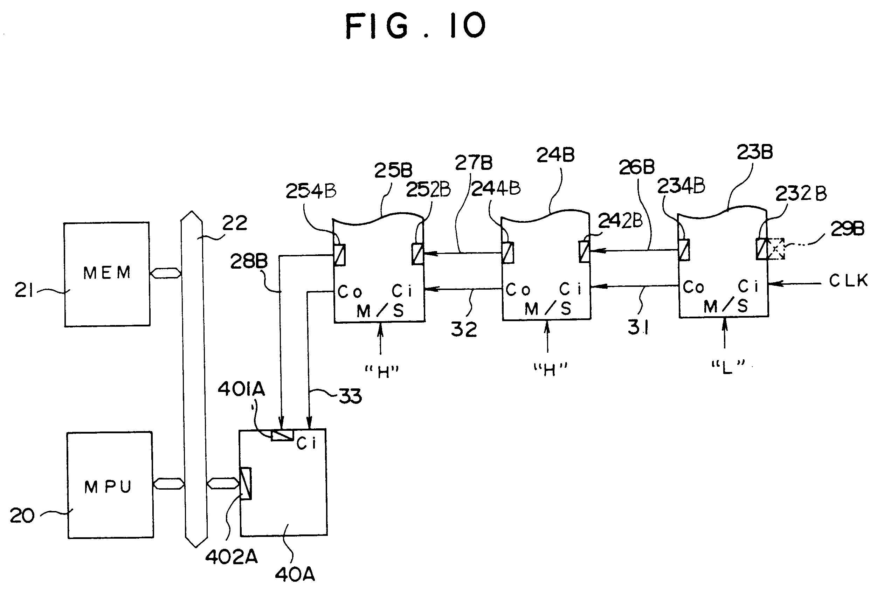

A description will now be given, with reference to Fig. 10, of a third embodiment of the present invention. In Fig. 10, only information receiving units 232B, 242B and 252B and information output units 234B, 244B and 254B of first, second and third ATM switching devices 23B, 24B and 25B are indicated, but other units actually provided in the ATM switching devices 23B, 24B and 25B are omitted.

Referring to Fig. 10, the first, second and third ATM switching devices 23B, 24B and 25B and a format conversion device 40A are connected by lines 26B, 27B and 28B, in the same manner in the second embodiment indicated in Fig. 8. The ATM switching devices 23B, 24B and 25B have clock input terminals Ci and clock output terminals Co, and the format conversion device 40A has a clock input terminal Ci. The clock signal CLK supplied to the clock input terminal Ci is used as a timing clock in each device and output from the clock output terminal Co. A clock line 31 connects the clock output terminal Co of the first ATM switching device 23B and the clock input terminal Ci of the second ATM switching device 24B. A clock line 32 connects the clock output terminal Co of the second ATM switching device 24B and the clock input terminal Ci of the third ATM switching device 25B. A clock line 33 connects the clock output terminal Co of the third ATM switching device 25B and the clock input terminal Ci of the format conversion device 40A. The clock signal CLK is supplied from an external unit to the clock input terminal Ci of the first ATM switching device 23B, so that the clock signal CLK is transmitted to the format conversion device 40A through the ATM switching devices 23B, 24B and 25B and the clock lines 31, 32 and 33. As a result, the first, second and third ATM switching devices 23B, 24B and 25B and the format conversion device 40A operate in synchronism with the clock signal CLK.

According to the third embodiment, since the clock signal CLK is transmitted through the ATM switching devices and the clock lines connecting the ATM switching devices, the wiring for the clock signal CLK can be simplified.

In the ATM switching device as shown in Fig. 3, a buffer having a predetermined capacity may be provided between the information receiving unit 232 and the statistical information generating unit 233. In this case, the statistical information generating unit 233 selects the output of the information collection unit 231 with priority to the information from the information receiving unit 232. That is, when both the output of the information collection unit 231 and the information from the information receiving unit 232 are valid as statistical information, the statistical information generating unit 233 selects the output of the information collection unit 231. The information from the information receiving unit 232 is maintained in the buffer. After the output of the information collection unit 231 is supplied to the information output unit 234, the information maintained in the buffer is selected by the statistical information generating unit 233. Thus, the statistical information collected in the ATM switching device and the statistical information transmitted from an ATM switching device in the prior stage are prevented from conflicting with each other.

In the above case, the buffer provided between the information receiving unit 232 and the statistical information generating unit 233 may have a capacity for a single item of statistical information. Furthermore, it is preferable that the buffer has a capacity for a plurality of items of statistical information. In this case, even if the statistical information items are simultaneously generated in a plurality of ATM switching devices, and/or even if the statistical information items are continuously generated in an ATM switching device in the prior stage, these statistical information items can be transmitted, without omissions, to an ATM switching device in the next stage.

In a case where there is no statistical information to be collected from the switching unit in an ATM switching device (the statistical information to be collected depending on design of the ATM switching device), information indicating this matter may be included in the format as shown in Fig. 5 or Fig. 9. In this case, if the ATM switching device has the buffer provided between the information receiving unit and the statistical information generating unit, information in the buffer may be always transmitted to an ATM switching device in the next stage.

The present invention is applicable to a switching device, other than the ATM switching device, in which information regarding operation states of a switching unit should be checked.

The present invention is not limited to the aforementioned embodiments, and variations and modifications may be made without departing from the scope of the claimed invention.

## Claims

1. A switching device comprising a switching unit (230) having input ports (Ti) and output ports (To), information supplied to each of the input ports (Ti) being switched to one of the output ports (To) **characterized in that** said switching device further comprises:
information collecting means (231) for collecting information regarding an operation state of said switching unit (230);
information receiving means (232) for receiving information from an external unit;
information generating means (233) for generating information based on the information obtained by said information collecting means (231) and the information received by said information receiving means (232); and
information output means (234) for outputting the information generated by said information generating means.

2. The switching device as claimed in claim 1, **characterized in that** said information generating means (233) has selecting means for selecting either the information collected by said information collecting means (231) or the information received by said information receiving means (232), selected information being supplied to said information output means (234).

3. The switching device as claimed in claim 2, **characterized in that** said selecting means selects the information collected by said information collecting means (231) with priority to the information received by said information receiving means (232).

4. A switching system comprising n switching devices (23, 24, 25) a first switching device to an n-th switching device, which are serially connected (n being an integer); and checking means for checking operation states of said switching devices (23, 24, 25) **characterized in that** each of said switching devices has:
a switching unit (230) having input ports (Ti) and output ports (To), information supplied to each of the input ports (Ti) being switched to one of the output ports (To);
information collecting means (231) for collecting information regarding an operation state of said switching unit (230);
information receiving means (232) for receiving information from an external unit;
information generating means (233) for generating information based on the information obtained by said information collecting means (231) and the information received by said information receiving means (232); and
information output means (234) for outputting the information generated by said information generating means (233), wherein
said information output means (234) of an i-th switching device (23) is connected to said information receiving means (242) of an (i+1)-th switching device (24) (i = 1, 2, ..., n-1), and said information output means (254) of said n-th switching device (25) is coupled to said checking means (20) so that said checking means (20) checks the operation states of said switching devices (23, 24, 25) based on the information supplied from said n-th switching device (25).

5. The switching system as claimed in claim 4, **characterized in that** a format of information transmitted through a path between said information output means (234) of said i-th switching device (23) and said information receiving means (242) of said (i+1)-th switching device (24) is the same as a format of information transmitted through a path between said information output means (254) of said n-th switching device (25) and said checking means (20).

6. The switching system as claimed in claim 5, **characterized in that** the format of the information is a format by which a plurality of bits of the information are transmitted through each of the paths in parallel.

7. The switching system as claimed in claim 4, **characterized in that** the information transmitted through a path between said information output means (234A) of said i-th switching device (23A) and said information receiving means (242A) of said (i+1)-th switching device (24A) has a predetermined format, and wherein said switching system further comprises:
format conversion means (40) for converting a format of the information output from said information output means (254A) of said n-th switching device (25A) into a format acceptable to said checking means (20).

8. The switching system as claimed in claim 7, **characterized in that** the format of the information transmitted through the path between said information output means (234A) of said i-th switching device (23) and said information receiving means (243A) of said (i+1)-th switching device (24A) is a format by which bits of the information are serially transmitted through the path.

9. The switching system as claimed in claim 4, **characterized in that** said information generating means (233) of each of said switching devices (23, 24, 25) has selecting means for selecting either the information collected by said information collecting means (231) or the information received by said information receiving means (232), selected information being supplied to said information output means (234).

10. The switching system as claimed in claim 9, **characterized in that** said selecting means selects the information collected by said information collecting means (231) with priority to the information received by said information receiving means (232).
